# EUROPÄISCHE PATENTSCHRIFT

(11) **EP 0 498 189 B1**
(45) Veröffentlichungstag und Bekanntmachung des Hinweises auf die Patenterteilung: **11.10.1995**
(21) Anmeldenummer: 92100716.7
(22) Anmeldetag: 17.01.1992
(51) Int. Cl.: B65G 15/60, B65G 23/36

(54) **Kurvengängiges, dezentral antreibbares Gummigurtband**
Curve going, locally driven rubber conveyorbelt
Bande de transport en caoutchouc courbe à entraînement décentralisé

(30) Priorität: 08.02.1991 DE 4103772; 17.09.1991 DE 4130819; 20.12.1991 DE 4142486
(43) Veröffentlichungstag der Anmeldung: 12.08.1992
(73) Patentinhaber: Lewin, Heinz-Ulrich, D-44149 Dortmund (DE)
(72) Erfinder: Lewin, Heinz-Ulrich, D-44149 Dortmund (DE); Ketterer, Jan, D-47803 Krefeld (DE)
(74) Vertreter: Schulte, Jörg, Dipl.-Ing.

(56) Entgegenhaltungen:
- EP-A- 0 102 568
- DE-A- 3 841 660
- DE-C- 834 366
- GB-A- 1 603 557
- GB-A- 2 054 507
- LU-A- 36 087

## Beschreibung

Die Erfindung betrifft ein Förderband, insbesondere für den Einsatz im untertägigen Berg- und Tunnelbau, das über dezentrale Antriebseinheiten, die über die Länge verteilt in einem Rollenböcke aufweisenden Traggerüst angeordnet sind, und einen auf der Unterseite des Gurteinlagen aufweisenden, aus elastischem Material bestehenden Gurtes vorgesehenen T-förmigen Führungssteg verfügt, in den über eine Spannvorrichtung gegeneinander verschwenkbare Antriebsrollen der Antriebseinheiten beidseitig eingreifen und zusammen mit antriebslosen Führungseinheiten im Untertrum den Gurt so in eine vorgegebene Richtung verschieben, wobei die den Gurt tragenden Rollenböcke eine Mittelrolle mit einer auch den Umkehrrollen zugeordneten Ausnehmungen vergleichbaren Ausnehmung aufweisen. Ein solches Förderband ist aus der DE-A-38 41 660 bekannt.

Derartige Gummigurtförderer werden vor allem im untertägigen Berg- und Tunnelbau für den Massenguttransport eingesetzt. Der aus elastischem Gummi bestehende Gurt wird in Rollenböcken und den endseitigen Umkehrrollen geführt, die sich auf einem Traggerüst abstütsen. Aus der DE-A-15 56 544 sind Förderer bekannt, die auf der Unterseite des Gummigurtes einen Führungssteg aufweisen. An diesen Führungssteg greifen Antriebs- und Führungsrollen an, die den Gradlauf des Förderbandes und auch einen einwandfreien Kurvenverlauf erreichen sollen. In den Führungssteg sind textile Verstärkungseinlagen oder -auflagen oder auch ein durchgehendes Drahtseil eingefügt, so daß ein recht stabiler Steg geschaffen ist. Nachteilig ist, daß ein solches Förderband nicht in einer Kurve als Kurvenbandförderer verlegt werden kann, weil nach wie vor an den beiden Enden des Förderers die notwendigen Antriebs- und Umkehrrollen installiert sind, die den sogenannten Gummiband- oder Flitzebogeneffekt erzeugen würden, wenn das Förderband in einer Kurve geführt würde. In der DE-A-32 29 061 ist zusätzlich zu den im Abstand vorgesehenen Führungen auch die verteilte Anordnung von Antrieben offenbart. Diese Antriebe verfügen über Antriebsrollen, die in den Führungssteg eingreifen, so daß ein derartiges Förderband um eine Kurve bzw. in einer Kurve verlegt werden kann. Die DE-A-33 38 425, die DE-A-37 41 054 und die DE-A-38 41 660 zeigen Kurvenbandförderer mit einem Führungssteg in Form eines profillierten Gummiriegels, ähnlich einem Doppel-T-Träger, der mit seinem oberen Querstück an der Gurtbanddecke angeklebt oder anvulkanisiert ist und in dessen Steg die Reibräder der Antriebs- und der Führungseinheiten eingreifen können. Der untere Flansch soll das Herausreißen des Führungssteges beim Durchfahren von Mulden und Sätteln zusätzlich verhindern bzw. erschweren. Auch bei diesen bekannten Förderbändern bleibt der Führungssteg ein Problempunkt, weil er insbesondere beim beladenen Band zwar beim Überlaufen der Girlandenböcke aufgrund von Ausnehmungen nicht bei Überlaufen der Umkehrrollen aber umso nachteiliger zusammengepreßt wird. Insbesondere tritt ein derartiger Walgeffekt somit an den Umkehren auf. Nachteilig ist weiter, daß je nach Kurvenradius und nach Länge des Bandes Probleme beim Durchfahren von Kurven auftreten, weil entweder die Andruckkräfte der Antriebsrollen zu hoch sind, so daß der auch an den Umkehrrollen und an den Rollenböcken auftretende Walgeffekt auftritt oder daß der Führungssteg trotz der T-förmigen Ausbildung und des unteren Flansches aus der Führung herausläuft.

Der Erfindung liegt daher die Aufgabe zugrunde, einen Kurvenbandförderer zu schaffen, der in kurzen Längen und Längen von mehreren 100 m, im beladenen und unbeladenen Zustand sicher mit Hilfe des auf der Unterseite des Gurtes angeordneten Führungsstege in Kurven mit Radien von 100 m und weniger zu führen und zu betreiben ist.

Die Aufgabe wird erfindungsgemäß dadurch gelöst, daß die die Spannvorrichtung, die die Antriebsrollen und damit den Führungssteg beeinflußt, arretierbar ausgebildet ist und daß der Führungssteg ebenso wie der gesamte Gurt aus einem hochelastischen, bei der Montage eine Vordehnung auf das nötige Maß zulassenden Gummi besteht.

Zunächst einmal begünstigt die hohe Elastizität des Gurtes das Durchfahren von Kurven mit größerem und kleinerem Durchmesser, ohne daß der Gurt als solcher darauf eingestellt werden muß. Eine genaue und sichere Führung ist dabei sichergestellt, weil das elastische Förderband und der entsprechend ausgebildete Führungssteg gleichmäßig geführt und angetrieben werden kann, wobei Walgeffekte weder an den Rollenböcken noch an den Umkehren auftreten können. Vielmehr wird der Gurt gleichmäßig über die gesamte Länge abgestützt, ohne den Führungssteg zu belasten, der aufgrund der arretierbaren Spannvorrichtung auch in dieser Richtung vor Walgarbeit geschützt und immer sicher gefaßt ist.

Nach einer zweckmäßigen Ausbildung der Erfindung ist vorgesehen, daß die Spannvorrichtung durch den Schwenkbereich begrenzende Verriegelungsbolzen arretierbar ist. Dadurch wird sichergestellt, daß die beiden Antriebsrollen jeweils gleichmäßig und nur bis zu einem vorgegebenen Maß an die Seitenwände des Führungssteges angepreßt werden können, so daß auch hier gezielt die negative Walgarbeit verhindert wird. Vorteilhaft ist dabei weiter, daß die Spannung jeweils genau eingehalten werden kann, wobei die Spannvorrichtung dabei so ausgebildet werden kann, daß sie bei auftretendem Verschleiß sich automatisch nachspannt bzw. ohne großen Aufwand mechanisch nachgespannt werden kann.

Eine weitere zweckmäßige Ausbildung sieht vor, daß die Mittelrolle aus zwei in einem Abstand zueinander angeordneten Teilrollen besteht, der dem Fuß des Führungssteges entsprechend bemessen ist. Eine solche Ausbildung ist vorteilhaft einfach, wobei die beiden Teilrollen leicht und sicher gelagert werden können, so daß eine Beschädigung oder Beeinträchtigung des Führungssteges nicht auftreten kann. Denkbar ist es dabei auch, daß wiederum die einzelnen Teilrollen so ausgebildet sind, daß sie zumindest den dagegenlaufenden Führungssteg führen bzw. zurückdrücken. Vorteilhaft bei dieser Ausbildung ist, daß auf die gleichen Durchmesser bei den Teilrollen zurückgegriffen werden kann, so daß eine Unwucht o. ä. nicht auftreten kann, wodurch eine gleichmäßige Abstützung des Förderbandes über die gesamte Länge sichergestellt wird.

Zur Vergleichmäßigung der Führung des Förderbandes ist es gemäß der Erfindung Zweckmäßig, wenn der Führungssteg im Untertrum über Führungseinheiten geführt ist, die in einem doppelt oder noch größerem Abstand als die Antriebsrollen im Obertrum angeordnet sind. Dadurch, daß das Förderband auch im Bereich des Untertrums gezielt geführt wird, ist ein Durchfahren von Strecken auch mit engeren Kurvenradien möglich.

Um einen sicheren Dauerbetrieb zu gewährleisten, ist es gemäß der Erfindung zweckmäßig, daß die Antriebsrollen und auch die Führungsseinheiten in einem mit dem Kurvenradius der Bandanlage zunehmenden Abstand angeordnet sind. Umgekehrt gesagt, je enger der Kurvenradius ist, desto enger muß der Abstand der Antriebsrollen und er Führungseinheiten sein, um auf diese Art und Weise den sicheren Betrieb zu gewährleisten. Beispielsweise bei einem mit einem Radius von 100 m verlegten Förderband werden insgesamt 10 Antriebseinheiten eingesetzt, die etwa alle 17 m angeordnet sind. Denkbar ist es auch, den Abstand der Antriebseinheiten von der Mitte der Kurve aus gesehen zu variieren, um so die gleichmäßige Führung des Gurtes zu erreichen. Die Abmessungen des Führungssteges vorzugsweise dessen Dicke sollte mit der Leistungsfähigkeit bzw. Breite der Bandanlage zunehmen, weil dann das Einleiten der notwendigen Kräfte sichergestellt werden kann. Dieses Stärkerwerden des Führungssteges ist vorteilhafter, als ihn mit einer entpsrechenden Einlage zu versehen, weil nämlich dann leicht der schon weiter oben beschriebene negative Flitzebogeneffekt doch wieder auftritt.

Weiter vorn ist bereits darauf hingewiesen worden, daß auch die Umkehrrollen zweckmäßigerweise eine Ausnehmung aufweisen, um den Führungssteg unbelastet um die Umkehre herumzuführen. Dies ist insbesondere dann möglich, wenn die Umkehrrollen und/oder die Mittelrollen der übrigen Rollenböcke mehrere auf einer Achse gelagerte Tragscheiben aufweisen, die unabhängig voneinander drehbar, mittig einen den Führungssteg angepaßten Abstand belassend und mit von der Gurtmitte zu den Außenkanten hin größer bemessenem Durchmesser ausgebildet sind. Diese Ausbildung hat bezüglich des Abwurfes des Fördergutes auch den Vorteil, daß eine gleichmäßige Muldung über die gesamte Länge vorgegeben ist, so daß derartige Förderbänder hoch beladen werden können, die dann an der Übergabe den Förderstrom gleichmäßig auf das nächste Förderband oder sonstige Fördermittel oder einen Bunker übergeben.

Um das Gesamtsystem möglichst gleich zu halten, mit geringer Antriebsendergie auszukommen und um Nachteile durch zu hohe Hitze o. ä. zu vermeiden, sieht die Erfindung vor, daß die Tragscheiben Durchbrechungen aufweisen und daß in den Durchbrechungen vorzugsweise Schaufeln die Belüftung und Kühlung sichernd ausgebildet sind. Durch diese Durchbrechungen und die darin angeordneten Schaufeln wird die Luft gezielt durch die gesamte Umkehrrolle bzw. Mittelrolle hindurchgeführt, so daß sich Probleme durch Erhitzung gar nicht erst einstellen können.

Zur Erhöhung der Antriebsleitung an den einzelnen Antriebsstationen, ohne den nachteiligen Walgeffekt zu erzeugen, sieht die Erfindung vor, daß mehrer in Förderrichtung hintereinander angeordnete Reibräder gemeinsam eine Antriebsrolleneinheit bilden, die über ein Drehmomentenübertragungssystem mit einem Motor verbunden und regelbar in Richtung Führungssteg bewegbar gelagert ist. Auf diese Weise kann eine mehrfach vergrößerte Antriebsleistung erzeugt und auch sicher übertragen werden, wobei vorteilhafterweise dazu keine zusätzlichen Motore oder Antriebe benötigt werden. Vielmehr wird durch die Mehrzahl der zum Einsatz kommenden Reibräder je Motor eine entsprechend bessere Antriebsübertragungsleistung erreicht. Der Andruck jedes Reibrades auf den Führungssteg ist mit dem Andruck der benachbarten Reibräder gleich und mit ihnen zugleich auch regelbar. Durch die gemeinsame Lagerung der Reibräder und ihre Bewegbarkeit in Richtung Führungssteg ist die Möglichkeit geschaffen, die jeweilige Antriebseinheit bei auftretender Blockierung einzelner Reibräder vom Führungssteg abzuheben, um auf diese Art und Weise eine unerwünschte und schädliche Erwärmung des Materials zu vermeiden.

Ein Abheben des Gurtes beim Durchfahren von Mulden und Sätteln wird durch die besondere Ausbildung des unteren Flansches des Führungssteges sichergestellt, wobei dieser Effekt noch gezielt dadurch optimiert werden kann, daß der untere Flansch des Führungssteges quer zur Längsachse des Führungssteges abschnittsweise Versteifungen in Form von Bolzen, Stiften oder Platten aufweist.

Diese Platten beeinträchtigen die Fördereigenschaften des Förderbandes nicht, bringen aber die notwendige Versteifung und Stabilisierung, so daß auch bei ungünstigsten Verhältnissen ein Herausreißen des Führungssteges aus den beiden Antriebsrollen nicht möglich ist. Der Führungssteg und damit auch der gesamte Gurt sind durch die Verwendung entsprechenden Materials und die Zuordnung von Einlagen weitgehend flexibel und dennoch ausreichend stabil, so daß bei hoher Steifigkeit in Längsrichtung in den Kurven doch genügend Flexibilität vorhanden ist. Um auch bei den Traggerüsten diese hohe Flexibilität zu erreichen, sieht die Erfindung vor, daß das Traggerüst Teileinheiten mit an den Enden spitz zusammenlaufenden Trägern aufweisen, die ein kardanisches Gelenk bildend ausgebildet sind. Über dieses Kardangelenk können die einzelnen Teileinheiten vorteilhaft in allen Ebenen und Richtungen gegeneinander verschwenkt werden, ohne daß es erforderlich ist, bei Änderungen des Kurvenverlauf irgendetwas an den Verbindungselementen zu verändern.

Insbesondere bei Einsatz von Gurten aus hochelastischem Gummi ist es vorteilhaft, wenn der Gurt mit einer eine Dehnung von 10 bis 50 %, vorzugsweise 15 bis 40 % zulassenden Gewebeeinlage versehen ist und daß ein vorzugsweise mittig des Gurtes verlaufender, eine die Länge des entlasteten Gurtes übertreffender, hochfester Zugträger vorgesehen ist, der nur punktuell mit dem Gurt verbunden ist. Aufgrund der geschickt ausgebildeten und angeordneten Armierung sowie des hochfesten Zugträgers ist ein Gurt geschaffen, der auch durch enge Kurven mit geringstem Kurvenradius herumgeführt werden kann, ohne daß die Gefahr besteht, daß entweder die Außenseite umklappt oder überdehnt wird und einreißt bzw. die Innenseite Falten wirft. Der Gurt trägt dabei das Fördergut ohne Probleme, weil aufgrund der Vordehnung und der dann straffen Lage des hochfesten Zugträgers ein einwandfreies Übertragen der Kräfte ohne Beeinflussung des eigentlichen Gurtes möglich ist. Hierbei ist es von Vorteil, wenn der Gurt mit Querversteifungen in Form von einvulkanisierten Einlagen oder aufvulkanisierten Querrippen ausgerüstet ist, um so ohne die Flexibilität in den Kurven zu vermeiden, insgesamt eine hohe Stabilität sichergestellt werden kann. Bei hohen Beanspruchungen ist das Ausrasten des Förderbandes aus den Antriebseinheiten ergänzend zu vermeiden, indem nämlich die Außenkante des Gurtes auf der Kurvenaußenseite Stützflächen, vorzugsweise in Form einer keulenartigen Verlängerung aufweisend ausgebildet ist und daß das Traggerüst im Kurvenbereich und den angrenzenden Bereichen im Abstand angeordnete Kragarme aufweist, die mit gegen die Stützflächen andrückbaren Fangrollen bestückt sind. Über diese Konstruktion wird das nach außen strebende Förderband gezielt zurückgehalten, ohne daß dabei eine Überanspruchung des Gurtes oder ein Umklappen auftreten kann, da er ja von der Innenseite her durch die entsprechende Vorrichtung auf Zug beansprucht ist.

Die Erfindung zeichnet sich insbesondere dadurch aus, daß ein Förderband geschaffen ist, dessen hervorstechendes Merkmal eine hohe Elastizität ist, die so groß ist, daß der Gurt bei seiner Montage um das nötige Maß elastisch vorgedehnt werden kann. Der Gurt verfügt darüber hinaus über einen Führungssteg, der eine dezentrale Antriebstechnik durch Reibrad ermöglicht. Der Gurt ist über seine gesamte Breite und Höhe gleichmäßig elastisch, während der Führungssteg vorteilhaft aus dem gleichen Material mit ihm fest verbunden ist oder sogar eine Baueinheit darstellt. Der Gurt hat eine Armierung, die einerseits die geforderte Elastizität des Gurtes nicht behindert und andererseits eine gewisse Quersteifigkeit des Gurtes erzeugt, die die Kerbfestigkeit erhöht und die für die Verbindungsklammern nötigen Widerlager bildet. Der Gurt ist durch den in der Mitte verlegten zugfesten Zugträger in der Lage, nach erfolgter elastischer Vordehnung des Gurtes ein Gummiband vorzugeben, das den jeweiligen Einsatzfällen genau genügt und auch in bestimmten Bereichen den jeweiligen Anwendungsfällen angepaßt werden kann. Vorteilhaft ist die Möglichkeit, durch die gezielte und genaue Führung auch Kurvenradien von unter 100 m zu durchfahren, wobei die Unteransprüche sogar Ausbildungen lehren, die auch Kurvenradien unter 50 m möglich machen. Der Führungssteg ist aufgrund des gewählten Materials, der Versteifungen seines Unterflansches und der schonenden Führung auch im Bereich der Rollenböcke und der Umkehrrollen bestens geeignet, die notwendigen Antriebskräfte zu übertragen, ohne daß eine Überanspruchung auftreten kann.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: ein Förderband im Schnitt mit dezentralem Antrieb,
- Fig. 2: ein in einer Kurve verlegtes Förderband,
- Fig. 3: einen Schnitt durch die in Fig. 2 dargestellte Strecke,
- Fig. 4: einen Rollenbock mit geteilter Mittelrolle und Untergurtführungsrolleneinheiten,
- Fig. 5: eine Antriebseinheit in Draufsicht mit Schwenkbegrenzung,
- Fig. 6: einen Antrieb gemäß Fig. 5 in Seitenansicht,
- Fig. 7: eine perspektivische Darstellung einer weiteren Ausführung einer Antriebseinheit,
- Fig. 8: ein Drehmomentenübertragungssystem in Draufsicht,
- Fig. 9: eine Kehrrolle im Längsschnitt,
- Fig. 10: eine Tragscheibe im Schnitt gemäß Fig. 9,
- Fig. 11: ein Förderband im Querschnitt mit entsprechend geschnittenem Führungssteg,
- Fig. 12: einen Schnitt durch den Führungssteg mit Verstärkungsplatte,
- Fig. 13: eine Schemazeichnung bezüglich des Einsatzes von Kardangelenken,
- Fig. 14: ein Förderband im entlasteten Zustand,
- Fig. 15: eine Draufsicht auf ein vorgespanntes Förderband und
- Fig. 16: ein Förderband mit Kantenführung.

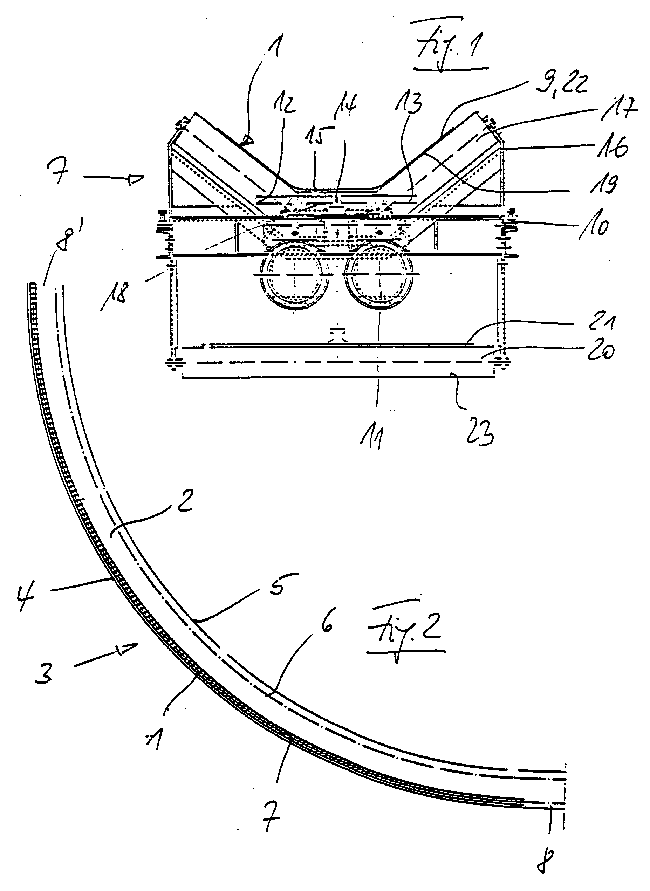

Fig. 1 zeigt ein Förderband (1) im Querschnitt, wobei dieses Förderband (1) in einer Strecke (2) verlegt ist, die in Fig. 2 in Draufsicht wiedergegeben ist. Das besondere an diesem Förderband (1) ist, daß es im Kurvenbereich (3) der Strecke (2) verlegt ist, wobei eine einwandfreie Förderung des hier nicht dargestellten Fördergutes sichergestellt ist.

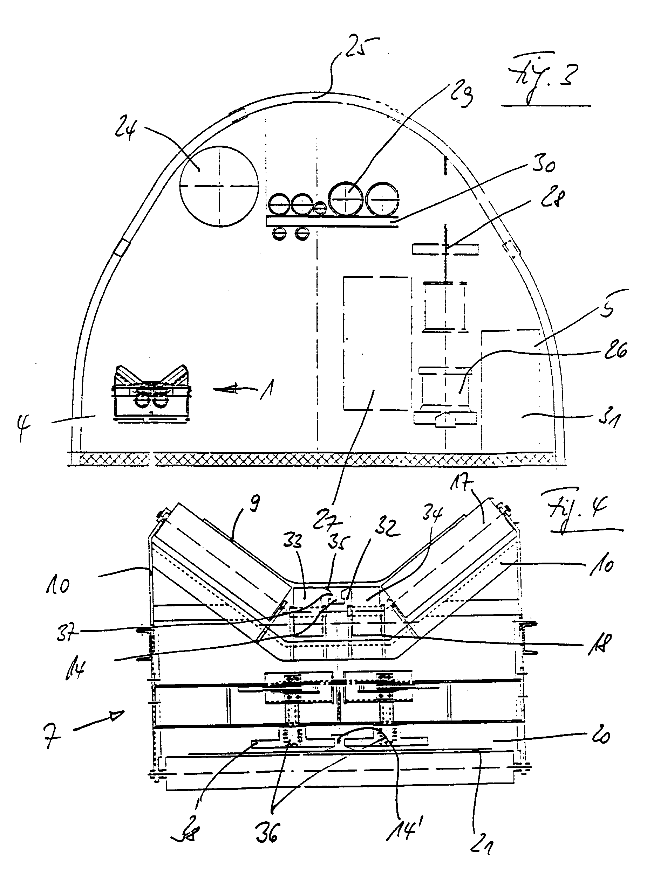

Während das Förderband (1) in der Kurvenaußenseite (4) der Strecke (2) verlegt ist, ist in der Kurveninnenseite (2) eine EHB-Anlage (6) verlegt. Sowohl die EHB-Anlage (6) wie die Bandanlage (7) weisen etwa den gleichen Platzbedarf auf, wie Fig. 3 verdeutlicht.

In den angrenzenden Bereichen (8, 8') kann das Förderband (8) dann gerade verlegt werden, so daß die Anforderungen dann wesentlich geringer sind.

Fig. 1 zeigt den Gurt (9), der im Traggerüst (10) geführt wird. Hierzu dienen zunächst einmal die im Abstand angeordneten Antriebseinheiten (11) mit ihren Antriebsrollen (12 und 13), die in den Führungssteg (14) auf der Unterseite des Gurtes (9) eingreifen. Der Führungssteg (14) und der gesamte Gurt (9) bestehen aus einem hochelastischen Gummi (15).

Um den Gurt (9) zu Mulden und damit fähig zu machen, größere Mengen an Fördergut aufzunehmen, sind die in Fig. 1 und auch in Fig. 4 wiedergegebenen Rollenböcke (16) vorgesehen. Diese Rollenböcke (16) bestehen hier aus zwei seitlichen Rollen (17) und der Mittelrolle (18), wobei diese Rollenböcke (16) das Obertrum (19) bilden. Auch im Untertrum (20) sind Rollen (23) zur Führung des Untergurtes (21) vorgesehen. Während der Obergurt (22) entsprechend gemuldet ist, kann der Untergurt (21) plan geführt werden.

Fig. 3 zeigt, wie schon erwähnt, einen Querschnitt durch eine Strecke (2), wobei deutlich wird, daß das Förderband (1) am seitlichen Stoß verlegt ist und zwar an der Kurvenaußenseite (4), während der Fahrweg (31) und die EHB-Anlage (6) an der Kurveninnenseite (5) installiert sind. Im Bereich der Firste sind die Lutte (24) und die Rohrleitungen (29) bzw. ihr Aufhängebalken (30) am Ausbaubogen (25) angeschlagen. Der EHB-Behälter (26) wird vom Hauptbedienungsraum (27) aus gehandhabt und ist an der EHB-Schiene (28) in dessen Längsrichtung verfahrbar.

Fig. 4 entspricht im wesentlichen der Fig. 1, nur daß hier die Mittelrolle (18) deutlich wiedergegeben ist, die mittig eine Ausnehmung (32) dadurch aufweist, daß sie aus zwei Teilrollen (33, 34) besteht. Diese Teilrollen (33, 34) belassen einen Abstand, der etwa der Breite des Fußes (35) des Führungssteges (14) entspricht.

Dieser Führungssteg (14) wird im Bereich des Untergurtes (21) zusätzlich durch eine Führungseinheit (36) geführt. Diese Führungseinheit verfügt nicht über Antriebe, sondern nur über sich mitdrehende Führungsrollen (38). Mit (37) ist übrigens die Führungsfläche bezeichnet, an der sich sowohl die Antriebsrollen (12, 13) wie auch die Führungsrollen (38) abstützen bzw. an sie anlegen.

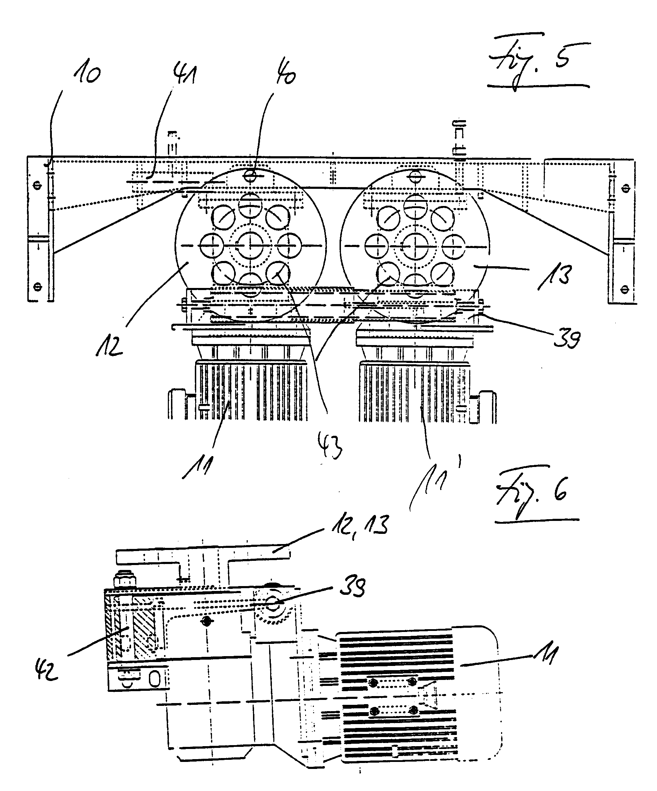

Die Antriebseinheiten (11) sind in Fig. 5 und 6 wiedergegeben. Dabei fällt zunächst einmal auf, daß die Antriebsrollen (12, 13) mit großen Bohrungen (43) versehen sind, die das Gewicht dieser Antriebsrollen (12, 13) verringern helfen sollen. Die Einheit aus den beiden Antriebsrollen (12, 13) wird über die Spannvorrichtung (39) gegeneinandergezogen, wobei dies dadurch möglich wird, daß diese um jeweils einen Schwenkpunkt (40) genau achsmittig vor ihnen am Traggerüst (10) schwenkbar gelagert sind. Um ein zu starkes Beeinflussen der zwischen den beiden Antriebsrollen (12, 13) geführten Führungssteg zu vermeiden, sind Verriegelungsbolzen (41) vorgesehen, die den Schwenkweg der Antriebseinheiten (11, 11') beschränken.

Fig. 6 zeigt die Seitenansicht zur Fig. 5, wobei hier sowohl die Anordnung der Spannvorrichtung (39) wie auch des Schwenkpunktes (40) bzw. der dazu dienenden Schraube (42) wiedergegeben ist. Jede dieser beiden Einheiten ist um jeweils eine solche Schraube (42) bzw. einen entsprechenden Schwenkpunkt (40) auf den anderen zu verschwenkbar.

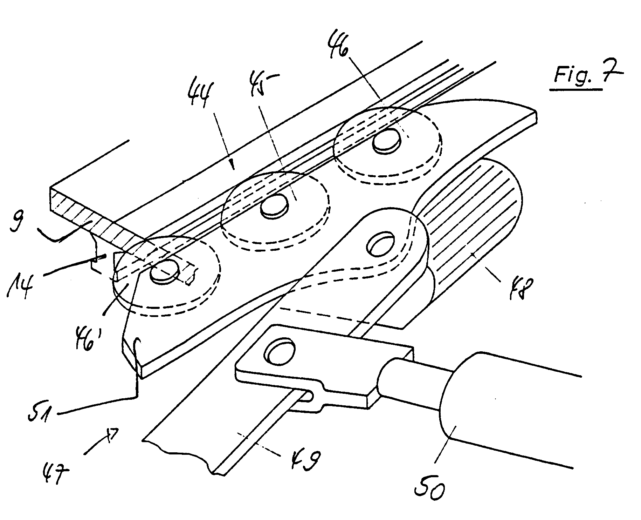

Fig. 7 zeigt eine Variante der Ausführungsform nach Fig. 5 und 6 mit einer Antriebsrolleneinheit (44), die insgesamt drei Reibräder (45, 46) aufweist. Die Reibräder (45, 46, 46') sind einer gemeinsamen Traverse (51) zugeordnet, in der sie drehbar gelagert sind. Die Traverse (51) wiederum ist mit einer Schwinge (49) schwenkbar verbunden, die über einen Arbeitszylinder (50) gehalten und mit dem hier nicht wiedergegebenen Traggerüst verbunden ist.

Über den Arbeitszylinder (50) und die Schwinge (49) wird die Antriebsrolleneinheit (44) gleichmäßig gegen den Führungssteg (14) gedrückt, wobei sichergestellt ist, daß von allen drei Reibrädern (45, 46) die gleiche Antriebskraft bzw. Andruckkraft übertragen werden kann. Die einzelnen Reibräder (45, 46) werden nach der Variante zu Fig. 5 und 6 gem. Fig. 8 durch einen einzigen Motor (48) angetrieben, der über ein Drehmomentübertragungssystem (47) mit ihnen in Verbindung steht. Die Reibräder (45, 46) dienen hier als Druckräder, die den gemeinsamen Zahnriemen (53) mit der Seite (54) an den Führungssteg (14) andrückt. Es ergibt sich somit eine vorteilhaft große Fläche für die Übertragung der Antriebskräfte. Eine gleichmäßige Führung des Zahnriemens (53) und einen möglichst günstigen Umschlingungswinkel erreicht man dadurch, daß im Bereich des Motor- und Getriebeabgangs (52) Druckrollen (55) angeordnet sind.

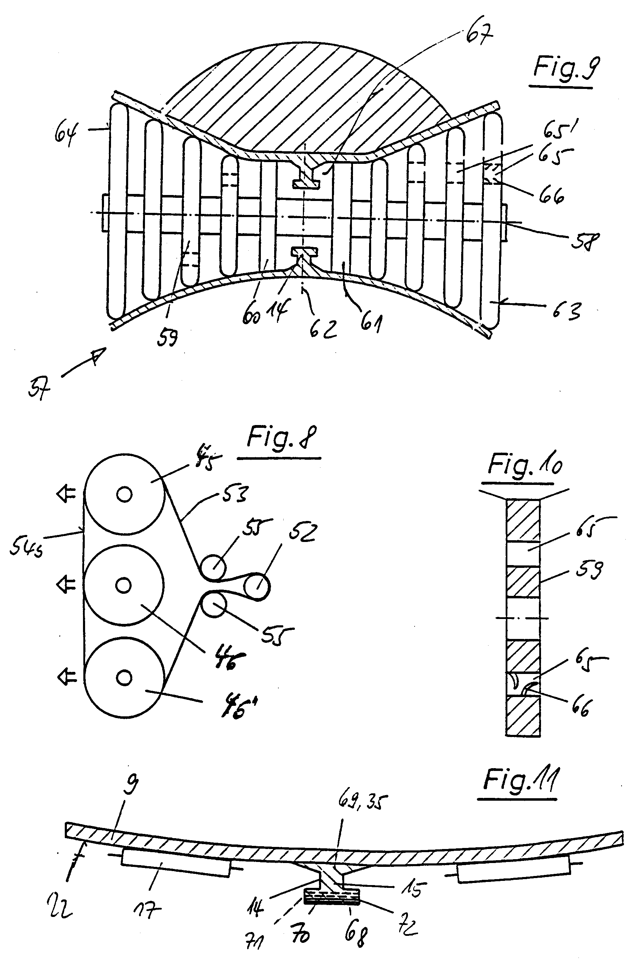

Fig. 9 zeigt eine Umkehrrolle (57), längsgeschnitten, wobei deutlich wird, daß sie aus mehreren einzelnen auf einer gemeinsamen Achse (58) sitzenden Tragscheiben (59, 60, 61) besteht. Diese Tragscheiben (59, 60, 61) weisen einen zur Gurtmitte (62) hin geringer werdenden Durchmesser bzw. zu den Außenkanten (63, 64) größer werdenden Durchmesser auf. Die Außenkanten der einzelnen Tragscheiben (59, 60, 61) sind abgerundet, um Beschädigungen am Gurt (9) zu vermeiden.

Derartige Umkehrrollen (57) geben nicht nur die notwendige Ausnehmung für den Führungssteg (14) vor, sondern sie ermöglichen auch eine vorteilhafte Muldung des Gurtes (9) im Bereich der Umkehrrollen (57), wodurch eine wesentlich bessere Führung und ein gleichmäßige Übergeben des Massengutes möglich ist.

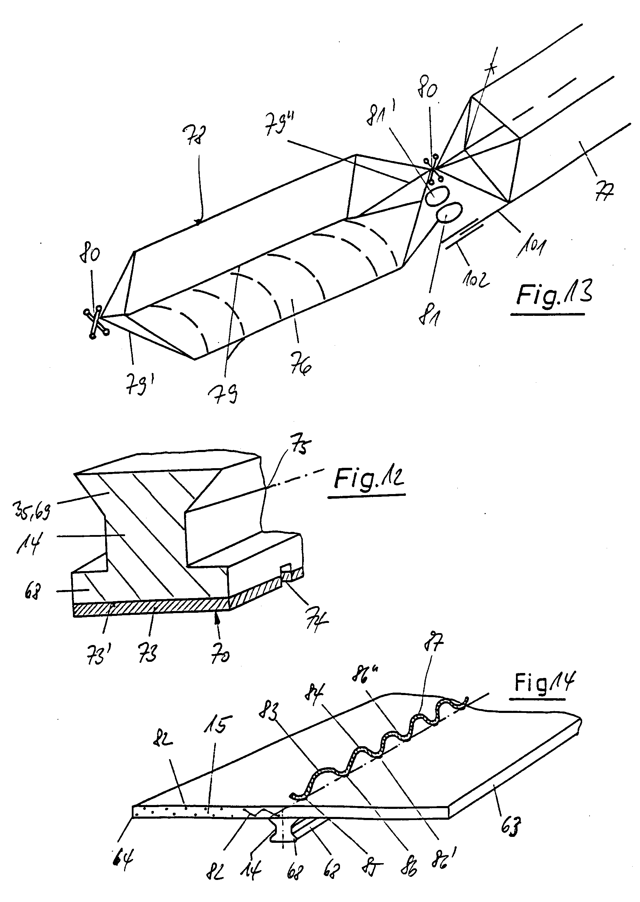

Die einzelnen Tragscheiben (59, 60, 61) sind mit Durchbrechungen (65) ausgerüstet, um einmal evtl. Reinigungsarbeiten mit Hilfe von Druckluft oder Wasser oder auch rein mechanisch leichter vornehmen zu können und um einen Bewetterungseffekt im Bereich der Umkehrrolle (57) zu erreichen. Dazu sind ergänzend in den Durchbrechungen (65) Schaufeln (66) vorgesehen, deren Lage auch Fig. 10 entnommen werden kann. Die Ausnehmungen (67) zwischen den einzelnen Tragscheiben (59, 60, 61) sind regelmäßig, d.h. ihre Abstände sind gleichmäßig gewählt, wobei lediglich mittig für den Führungssteg eine entsprechend vergrößerte Ausnehmung (67) verbleibt.

Fig. 11 zeigt eine vereinfachte Darstellung eines Obergurtes (22). Der Gurt (9) wird, wie angedeutet, durch seitliche Rollen und auch weitere Rollen (17) unterstützt. Mittig ist der Steg (14) angeordnet, der mit seinem Fuß (35) bzw. seinem Oberflansch (69) an den Gurt (9) anvulkanisiert ist. Entsprechend breit ist dieser Fuß (35) ausgebildet. Bei der aus Fig. 11 ersichtlichen Ausführungsform ist der untere Flansch (68) mit Versteifungen (70) ausgerüstet. Diese Versteifungen können die Form eines Bolzens (71), der quer zur Längsrichtung des Führungssteges (14) verläuft oder durch Platten wahrgenommen werden, wie sie Fig. 12 entnommen werden können. Die Bolzen werden in Querbohrungen (72) eingeschoben, während die Platte (73) auf der z.B. aufgerauhten Fläche (73') aufgeklebt werden kann. Um dem Gurt (9) die notwendige Stabilität zu belassen, sind Einkerbungen (74) vorgesehen. Damit ist insbesondere das Umfahren der Umkehrrollen (57) sichergestellt. Die Einkerbungen (74) verlaufen quer zur Längsachse (75) des Führungssteges (14).

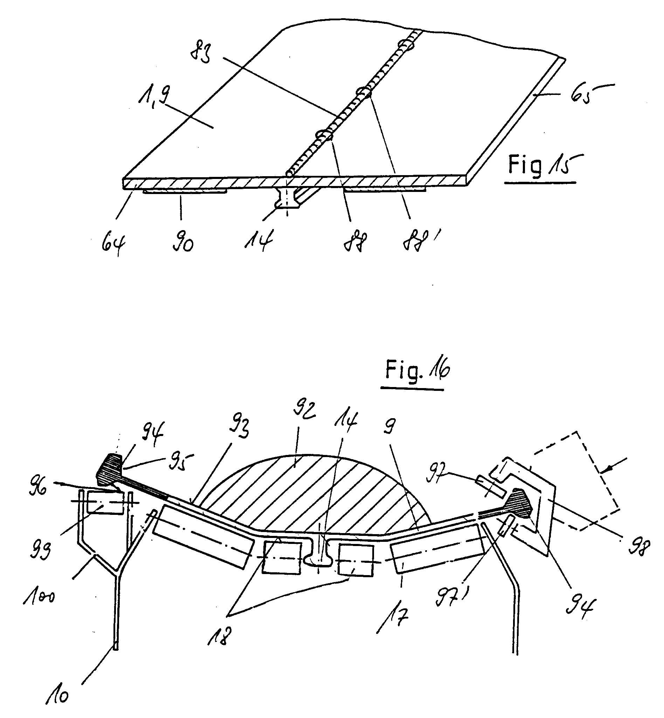

Ein allen Gegebenheiten leicht anpaßbares Traggerüst ist zu erreichen, wenn die einzelnen Teileinheiten (76, 77) des Traggerüstes (10) über ein kardanisches Gelenk (80) miteinander verbunden sind. Hierzu werden die einzelnen Träger (78, 79), wie aus Fig. 13 ersichtlich, zusammengeführt. Sie laufen an den Verbindungsenden spitz zusammen, um so das kardanische Gelenk (80) zu treffen. Dieses kardanische Gelenk (80) kann unterschiedliche Ausführungen haben, wobei sich dadurch eine vorteilhafte Flexibilität und eine günstige Ausrichtung bzw. Auslenkung der einzelnen Teileinheiten (76, 77) ergibt.

Es wird weiterhin vorgeschlagen, die Führungsrollen (81) am Ende jeder Teileinheit (76, 77) möglichst dicht an einer gedachten Linie zu installieren, die rechtwinklig zur Längserstreckung der Teileinheit durch das Kardangelenk (80) geht. Auf diese Weise kann verhindert werden, daß bei vertikalen Abwinklungen des Fördererbandes (1) durch ungleiche Abstände des Gurtes (9) zum Kardangelenk (80) Ungleichgewichte in den Drehmomenten auftreten und zu einem Ausknicken des Förderbandes (1) bzw. des Traggerüstes (10) führen.

In frei wählbarem Abstand zu den Drehpunkten des Kardangelenkes (80) können Anschlagflächen (101) vorgesehen werden, die - unter Umständen verstellbar gestaltet und mit entsprechenden Verlängerungen (102) ausgerüstet - die von den Kardangelenken (80) ermöglichten Winkelbewegungen zwischen den einzelnen Teileinheiten (76, 77) auf ein gewünschtes Maß begrenzen. Die Teileinheiten (76, 77) beinhalten alle Vorrichtungen und Hilfsteile, die notwendig sind, um den Gurt (9) zu tragen, zu führen und auch anzutreiben. Denkbar ist es auch, das gesamte Förderband auf Fahrwerke zu setzen oder an Fahrwerke anzuhängen, um so beispielsweise einen Förderer gelenkig verfahrbar zu gestalten.

Fig. 14 zeigt eine Auführung, bei der ein Gummi (15) zum Einsatz kommt, das Dehnungen von mindestens 15 bis 40 % zuläßt. Hierzu sind diagonal verlegte Gewebeeinlagen (82) unterstützend vorgesehen, bei denen Kette und Schuß nicht längs und quer zum Führungssteg (14) verlaufen, sondern diagonal dazu. Denkbar sind auch anders hergestellte Textileinlagen in Form von gestrickten, gewebten oder als Vlies verarbeiteten Garnen. Ein derart aufgearbeitetes Förderband (1) bildet in der Regel mit dem Führungssteg (14) eine Baueinheit. Beide verfügen über eine große Elastizität, wobei die notwendigen Zugkräfte durch die Gewebeeinlagen, vor allem aber durch einen Zugträger (83) hoher Festigkeit erreicht wird. Dieser Zugträger (83) ist in der Mitte des Gurtes (9) verlegt und in kurzen Abständen unter Bildung von Schlaufen (84, 87) an wenigen Befestigungspunkten (85, 86) mit dem Gurt (9) verbunden. Dieser Zugträger (83) kann auf der hochelastischen Decke des Förderbandes (1) vor der Vordehnung des Gurtes (9) angebracht werden, wobei er mit der Dehnung sich in die Länge zieht und bei Erreichen der vorgesehenen Vordehnung dann die notwendigen Zugkräfte gezielt aufnehmen kann.

Fig. 15 zeigt dann die Ausführung, bei der die Vordehnung dem Gurtes (9) eine Strafflegung des Zugträgers (83) erreicht hat. Bei der hier wiedergegebenen Ausführung ist der Zugträger (83) darüber hinaus in Ringen (88) geführt, so daß eine Verbindung mit dem Förderband (1) nicht zwangsläufig notwendig ist. Damit ist dann auch die Möglichkeit gegeben, einen Zugträger (83) in Form eines Stahlseiles zu verwenden, das ansonsten schwierig oder gar nicht mit dem Gurt (9) verbunden werden kann.

Beim Auflegen des Förderbandes (1) auf das Traggerüst (10) muß es durch geeignete Vorrichtungen um das vorgesehene Maß elastisch vorgedehnt werden, bevor es dann zu einem endlosen Gurt zusammengeschlossen wird. Durch die Gewebeeinlage (82) bzw. die Armierung ist dann das Widerlager für die einzubringenden Verbindungsklammern geschaffen, wobei nach Fig. 15 zusätzliche Querversteifungen (90) sich vorteilhaft ergänzend auswirken können. Diese Querversteifungen (90) sind aufvulkanisiert oder einvulkanisiert, so daß sich eine vorteilhafte Quersteifigkeit ergibt, ohne daß die Längsflexiblität dadurch behindert würde. Durch die Vordehnung ist der Gurt (9) immer stramm und kann seine Förderfunktion voll erfüllen.

Fig. 16 weist zusätzlich zu den bereits diskutierten Merkmalen an den Außenkanten (93) keulenartige Verlängerungen auf. Mittig trägt der Gurt (9) ein Fördergut (92), hier beispielsweise Kohle. Die keulenartigen Verlängerungen (94) weisen Stützflächen (95, 96) auf, an denen sich die Fangrollen (97) der Fangarme (98) abstützen können. Die Stützflächen (95, 96) verlaufen schräg zur Oberseite bzw. Unterseite des Gurtes (9). Es ergibt sich eine ausreichend stabile Stützwand, auf der die Fangrollen (97) sicher abrollen können. Die keulenartige Verlängerung (94) wird immer an der Kurvenaußenseite (4) angebracht, um so den Gurt quasi in seiner richtigen Lage durch Aufbringen von Zugkräften zu halten. Dadurch ist verhindert, daß sich Falten o.ä. die Wirkung des Bandes beeinträchtigende Veränderungen ergeben.

Sind auf beiden Seiten derartige keulenartige Verlängerungen (84) vorgesehen, so ist es zweckmäßig, die nicht im Einsatz befindliche keulenartige Verlängerung (94) durch eine Stützrolle (99) zu unterstützen, die an die Bandkonstruktion über ein Rollengestänge (100) angesetzt ist.

## Patentansprüche

1. Förderband (1), insbesondere für den Einsatz im untertägigen Berg- und Tunnelbau, das über dezentrale Antriebseinheiten (11), die über die Länge verteilt in einem Rollenböcke (16) aufweisenden Traggerüst (10) angeordnet sind, und einen auf der Unterseite des Gurteinlagen aufweisenden, aus elastischem Material bestehenden Gurtes (9) vorgesehenen T-förmigen Führungssteg (14) verfügt, in den über eine Spannvorrichtung (39) gegeneinander verschwenkbare Antriebsrollen (12, 13) der Antriebseinheiten (11) beidseitig eingreifen und zusammen mit antriebslosen Führungseinheiten (36) im Untertrum (20) den Gurt (9) so in eine vorgegebene Richtung verschieben, wobei die den Gurt (9) tragenden Rollenböcke (16) eine Mittelrolle (18) mit einer auch den Umkehrrollen (57) zugeordneten Ausnehmungen (67) vergleichbaren Ausnehmung (32) aufweisen,
**dadurch gekennzeichnet**,
daß die die Spannvorrichtung (39), die die Antriebsrollen (12, 13) und damit den Führungssteg (14) beeinflußt, arretierbar ausgebildet ist und daß der Führungssteg (14) ebenso wie der gesamte Gurt (9) aus einem hochelastischen, bei der Montage eine Vordehnung auf das nötige Maß zulassen - den Gummi (15) besteht.

2. Förderband nach Anspruch 1,
**dadurch gekennzeichnet**,
daß die Spannvorrichtung (39) durch den Schwenkbereich begrenzende Verriegelungsbolzen (41) arretierbar ist.

3. Förderband nach Anspruch 1,
**dadurch gekennzeichnet**,
daß die Mittelrolle (18) aus zwei in einem Abstand zueinander angeordneten Teilrollen (33, 34) besteht, der dem Fuß (35) des Führungssteges (14) entsprechend bemessen ist.

4. Förderband nach Anspruch 1,
**dadurch gekennzeichnet**,
daß der Führungssteg (14) im Untertrum (20) über Führungseinheiten (36) geführt ist, die in einem doppelt oder noch größeren Abstand als die Antriebsrollen (12, 13) im Obertrum (19) angeordnet sind.

5. Förderband nach Anspruch 1 und Anspruch 4,
**dadurch gekennzeichnet**,
daß die Antriebsrollen (12, 13) und auch die Führungseinheiten (36) in einem mit dem Kurvenradius der Bandanlage (7) zunehmenden Abstand angeordnet sind.

6. Förderband nach Anspruch 1,
**dadurch gekennzeichnet**,
daß die Abmessungen des Führungssteges (14, 14') vorzugsweise dessen Dicke mit der Leistungsfähigkeit bzw. Breite der Bandanlage (7) zunehmend ausgebildet ist.

7. Förderband nach Anspruch 1,
**dadurch gekennzeichnet**,
daß die Umkehrrollen (57) und/oder die Mittelrollen (17) mehrere auf einer Achse (57) gelagerte Tragscheiben (59, 60, 61) aufweisen, die unabhängig voneinander drehbar, mittig einen dem Führungssteg (14) angepaßten Abstand belassend und mit von der Gurtmitte (62) zu den Außenkanten (63, 64) hin größer bemessenem Durchmesser ausgebildet sind.

8. Förderband nach Anspruch 7,
**dadurch gekennzeichnet**,
daß die Tragscheiben (59, 60, 61) Durchbrechungen (65) aufweisen und daß in den Durchbrechungen vorzugsweise Schaufeln (66) die Belüftung und Kühlung sichernd ausgebildet sind.

9. Förderband nach Anspruch 1,
**dadurch gekennzeichnet**,
daß in Antriebsrollen (12, 13) aus mehrere in Förderrichtung hintereinander angeordnete Reibräder (45, 46), die gemeinsam eine Antriebsrolleneinheit (44) bilden, bestehen und die über ein Drehmomentübertragungssystem (47) mit einem Motor (48) verbunden und regelbar in Richtung Führungssteg (14) bewegbar gelagert sind.

10. Förderband nach Anspruch 1,
**dadurch gekennzeichnet**,
daß der untere Flansch (68) des Führungssteges (14) quer zur Längsachse (75) des Führungssteges abschnittsweise Versteifungen (70) in Form von Bolzen (71), Stiften oder Platten (73) aufweist.

11. Förderband nach Anspruch 1,
**dadurch gekennzeichnet**,
daß das Traggerüst (10) Teileinheiten (76, 77) mit an den Enden spitz zusammenlaufenden Trägern (78, 79) aufweisen, die ein kardanisches Gelenk (80) bilden.

12. Förderband nach Anspruch 1,
**dadurch gekennzeichnet**,
daß der Gurt (9) mit einer eine Dehnung von 10 bis 50 %, vorzugsweise 15 bis 40 % zulassenden Gewebeeinlage (82) versehen ist und daß ein vorzugsweise mittig des Gurtes verlaufender, eine die Länge des entlasteten Gurtes übertreffender, hochfester Zugträger (83) vorgesehen ist, der nur punktuell (85, 86) mit dem Gurt verbunden ist.

13. Förderband nach Anspruch 1 und Anspruch 12,
**dadurch gekennzeichnet**,
daß der Gurt (9) mit Querversteifungen (90) in Form von einvulkanisierten Einlagen oder aufvulkanisierten Querrippen ausgerüstet ist.

14. Förderband nach Anspruch 1,
**dadurch gekennzeichnet**,
daß die Außenkante (93) des Gurtes (9) auf der Kurvenaußenseite (4) Stützflächen (95, 96), vorzugsweise in Form einer keulenartigen Verlängerung (94), aufweisend ausgebildet ist und daß das Traggerüst (10) im Kurvenbereich (3) und den angrenzenden Bereichen (8, 8') im Abstand angeordnete Kragarme (98) aufweist, die mit gegen die Stützflächen andrückbaren Fangrollen (97) bestückt sind.

## Claims

1. Conveyor (1) in particular for use in underground mining and tunnelling, which has off-centre driving units (11) arranged over the length of a support frame (10) having roller supports (16) and a T-shaped guide link (14) provided on the underside of a belt (9) which has belt inserts and is made of an elastic material, into which guide link drive rollers (12, 13) of the drive units (11), which can be swivelled towards each other by a clamping device (39) engage on both sides and together with drive-free guiding units (36) in the lower return run (20) move the belt (9) in a predetermined direction, whereby the roller supports (16) supporting the belt (9) each have a central roller (18) with a recess (32) similar to the recesses assigned (67) to the reversing rollers (57)
**characterised in that**
the clamping device (39) which influences the drive rollers (12, 13) and thereby the guide link (14) is designed to be arrestable and the guide link (14) like the whole belt (9) is made of a highly-elastic rubber (15) permitting prestretching to the necessary length on assembly.

2. Conveyer according to claim 1,
**characterised in that**
the clamping device (39) can be arrested by the locking bolts (41) restricting the swivel range.

3. Conveyor according to claim 1,
**characterised in that**
the central roller (18) comprises two part rollers (33, 34) arranged at a distance from one another measured according to the foot (35) of the guide link (14).

4. Conveyor according to claim 1,
**characterised in that**
the guide link (14) in the lower return run (20) is guided over guiding units (36) which are arranged in the upper run (19) at a distance twice that or even more than the drive rollers (12, 13).

5. Conveyor according to claim 1 and claim 4,
**characterised in that**
the drive rollers (12, 13) and the guiding units (36) are arranged at a distance increasing with the turning radius of the belt system (7).

6. Conveyor according to claim 1,
**characterised in that**
the measurements of the guide link (14, 14') preferably its thickness is formed to increase with the performance and width of the belt system (7).

7. Conveyor according to claim 1,
**characterised in that**
the reverse rollers (57) and/or the central rollers (17) have several bearing discs (59, 60, 61) mounted on an axis (57) which are rotatable independently of one another leaving a distance in the middle adapted to the guide link (14) and formed with an increasingly large diameter from the belt middle (62) to the outer edges (63, 64).

8. Conveyor according to claim 7,
**characterised in that**
the bearing discs (59, 60, 61) have breaks (65) and preferably vanes (66) are formed in the breaks to ensure ventilation and cooling.

9. Conveyor according to claim 1,
**characterised in that**
the drive rollers (12, 13) comprise several friction wheels (45, 46) arranged behind one another in the conveying direction which together form a drive roller unit (44) and are connected to a motor (48) by a torque transfer system (47) and are movably mounted to be controllable in the direction of the guide link (14).

10. Conveyor according to claim 1,
**characterised in that**
the lower flange (68) of the guide link (14) has reinforcements (70) in sections in the form of bolts (71), pins or plates (73) at right angles to the longitudinal axis (75) of the guide link.

11. Conveyor according to claim 1,
**characterised in that**
the support frame (10) has part sections (76, 77) with supports (78, 79) joining together in a point at the ends forming a Cardan joint (80).

12. Conveyor according to claim 1,
**characterised in that**
the belt (9) is provided with a textile insertion (82) permitting an extension of 10 to 50%, preferably 15 to 40% and a high-tensile tension carrier (83) is provided running preferably in the centre of the belt exceeding the length of the unloaded belt, which is only connected to the belt at certain points (85, 86).

13. Conveyor according to claim 1 and claim 12,
**characterised in that**
the belt (9) is furnished with transverse reinforcements (90) in the form of inserts vulcanised thereinto or cross-ribs vulcanised thereonto.

14. Conveyor according to claim 1,
**characterised in that**
the outer edge (93) of the belt (9) on the curved outer side (4) has support surfaces (95, 95), preferably in the form of lobe-like extensions (94), is formed turning upwards and the support frame (10) has cantilevers (98) in the curved area (3) and the adjacent areas (8, 8') arranged at a distance from one another which are faced with safety rollers (97) which can be pressed against the support surfaces.

## Revendications

1. Bande transporteuse (1), plus particulièrement pour l'utilisation dans la construction souterraine des mines et des tunnels, comprenant des unités d' entraînement (11) indépendantes disposées dans une ossature (10) munie de supports à rouleaux (16) et réparties sur la longueur de la bande, et une entretoise de guidage (14) en forme de T prévue sur la partie inférieure de la courroie (9) en matériau élastique, munie d'une armature, sur laquelle entretoise de guidage s'engagent, des deux côtés, des rouleaux d'entraînement (12, 13) des unités d'entraînement (11), susceptibles de pivoter l'un par rapport à l'autre au moyen d'un dispositif tendeur (39), et, ensemble avec les unités de guidage (36) sans entraînement disposées dans le brin inférieur (20), déplacent la courroie (9) dans une direction prédéterminée, les supports à rouleaux (16) portant la courroie (9) étant pourvus d'un rouleau central (18) ayant une gorge (32) comparable aux gorges (67) agencées sur les tambours de renvoi (57), caractérisée en ce que le dispositif tendeur (39), qui agit sur les rouleaux d'entraînement (12, 13) et par là même sur l'arête de guidage (14), est formé de manière à pouvoir être arrêté, et en ce que l'arête de guidage (14), tout comme la courroie tout entière (9), se compose d'un caoutchouc (15) hautement élastique permettant au montage un pré-allongement à la dimension nécessaire.

2. Bande transporteuse selon la revendication 1, caractérisée en ce que le dispositif tendeur (39) est susceptible d'être arrêté par des chevilles de verrouillage (41) limitant la zone de pivotement.

3. Bande transporteuse selon la revendication 1, caractérisée en ce que le rouleau central (18) se compose de deux rouleaux partiels (33, 34) disposés à un intervalle l'un par rapport à l'autre, intervalle qui correspond aux dimensions du pied (35) de l'entretoise de guidage (14).

4. Bande transporteuse selon la revendication 1, caractérisée en ce que l'entretoise de guidage (14) est guidée dans le brin inférieur (20) par des unités de guidage (36) qui sont disposées dans un intervalle double ou plus grand encore que celui des rouleaux d' entraînement (12, 13) dans le brin supérieur (19).

5. Bande transporteuse selon les revendications 1 et 4, caractérisée en ce que les rouleaux d' entraînement 12, 14) et également les unités de guidage (36) sont disposés dans un intervalle augmentant avec le rayon de courbure de la bande transporteuse (7).

6. Bande transporteuse selon la revendication 1, caractérisée en ce que les dimensions de l'entretoise de guidage (14, 14'), de préférence leur épaisseur, croît avec la capacité ou la largeur de la bande transporteuse (7).

7. Bande transporteuse selon la revendication 1, caractérisée en ce que les tambours de renvoi (57) et/ou les rouleaux centraux (17) comprennent plusieurs disques porteurs (59, 60, 61) montés sur un axe (58) et qui peuvent tourner indépendamment les uns des autres, laissant au milieu un intervalle adapté à l'entretoise de guidage (14) et ayant un diamètre croissant du milieu de la courroie (62) vers les arêtes extérieures (63, 64).

8. Bande transporteuse selon la revendication 7, caractérisée en ce que les disques porteurs (59, 60, 61) présentent des entailles (65) et que sont formées, dans les entailles (66), de préférence des ailettes pour assurer l'aération et le refroidissement.

9. Bande transporteuse selon la revendication 1, caractérisée en ce que les rouleaux d' entraînement (12, 13) se composent de plusieurs roues de friction (45, 46) disposées l'une derrière l'autre dans le sens du transport, lesdites roues de friction formant ensemble une unité de rouleaux d'entraînement (44) reliés au moteur (48) par un système de transmission de couple (47) et montés mobiles et ajustables vers l'entretoise de guidage (14).

10. Bande transporteuse selon la revendication 1, caractérisée en ce que la bride (68) inférieure de l'entretoise de guidage (14) présente, transversalement à l'axe longitudinal (75) de l'entretoise de guidage (14), des renforcements (70) par sections sous forme de chevilles (71), de tiges ou de plaques (73).

11. Bande transporteuse selon la revendication 1, caractérisée en ce que l'ossature (10) comprend des unités partielles (76, 77) ayant des bras (78, 79) qui présentent des extrémités en pointe effilée et qui forment un joint de cardan (80).

12. Bande transporteuse selon la revendication 1, caractérisée en ce que la courroie (9) est pourvue d'une armature en textile admettant une extension de 10 à 50%, de préférence une extension de 15 à 40%, et en ce qu'il est prévu un tirant (83) à haute résistance, passant au milieu de la courroie et dépassant la longueur de la courroie au repos, ledit tirant n'étant lié que ponctuellement (85, 86) à la courroie.

13. Bande transporteuse selon les revendications 1 et 12, caractérisée en ce que la courroie (9) est munie de renforcements transversaux (90) sous forme de garnitures vulcanisées dans, ou de nervures transversales vulcanisées sur la bande.

14. Bande transporteuse selon la revendication 1, caractérisée en ce que l'arête extérieure (93) de la courroie (9) est munie, sur le côté extérieur (4), de surfaces d'appui (95, 96), de préférence sous forme d'un prolongement (94) lobé , et que l'ossature (10) est munie de bras en porte à faux (98) disposés à intervalle dans la zone incurvée (3) et les zones avoisinantes (8, 8'), lesdits bras portant des rouleaux d'arrêt (97) susceptibles de s'appuyer sur les surfaces d'appui.
